# EUROPEAN PATENT SPECIFICATION

(11) **EP 2 462 366 B1**
(45) Date of publication and mention of the grant of the patent: **15.07.2020**
(21) Application number: 10807203.4
(22) Date of filing: 06.08.2010
(51) Int. Cl.: F16J 1/01, F02F 3/02

(54) **LOW THERMAL CONDUCTIVITY PISTON AND METHOD OF CONSTRUCTION THEREOF**
KOLBEN VON GERINGER WÄRMELEITFÄHIGKEIT UND KONSTRUKTIONSVERFAHREN DAFÜR
PISTON À FAIBLE CONDUCTIVITÉ THERMIQUE ET SON PROCÉDÉ DE CONSTRUCTION

(30) Priority: 06.08.2009 US 231783 P
(43) Date of publication of application: 13.06.2012
(73) Proprietor: Tenneco Inc., Lake Forest, IL 60045 (US)
(72) Inventor: REBELLO, Jose, Ann Arbor MI 48104 (US); EGERER, Thomas, Ann Arbor MI 48103 (US)
(74) Representative: Hoffmann Eitle
(86) International application number: PCT/US2010/044636
(87) International publication number: WO 2011/017581

(56) References cited:
- WO-A1-03/036045
- FR-A1- 2 376 348
- GB-A- 2 075 147
- JP-A- 4 321 759
- KR-A- 20030 039 004
- US-A- 4 581 983
- US-A- 4 831 917
- US-A1- 2002 046 593
- US-B1- 6 729 291
- DEUTSCHE EDELSTAHLWERKE: "1.4462 Nichtrostender austenitisch-ferritischer Chrom-Nickel-Molybdän-Stahl", INTERNET CITATION, 31 January 2008 (2008-01-31), pages 1-4, XP002695797, Retrieved from the Internet: URL:http://www.dew-stahl.com/fileadmin/fil es/dew-stahl.com/documents/Publikationen/W erkstoffdatenblaetter/RSH/1.4462_de.pdf [retrieved on 2013-04-22]
- Lucefin: "Chemical composition Temperature °C Hot-forming Normalizing Quenching Quenching Tempering Stress-relieving", , 9 November 2017 (2017-11-09), XP055423471, Retrieved from the Internet: URL:http://www.lucefin.com/wp-content/file s_mf/0242crmo472.pdf [retrieved on 2017-11-09]
- Klaus Mollenhauer: "Handbook of Diesel Engines", 1 January 2010 (2010-01-01), Springer, Berlin ISBN: 978-3-540-89082-9 pages 282-282,

## Description

### CROSS-REFERENCE TO RELATED APPLICATIONS

This application claims the benefit of U.S. Provisional Application Serial No. 61/231,783, filed August 6, 2009.

### BACKGROUND OF THE INVENTION

### 1. Technical Field

This invention relates generally to internal combustion engines, and more particularly to pistons and their method of construction.

### 2. Related Art

Engine manufacturers are encountering increasing demands to improve engine efficiencies and performance, including, but not limited to, improving fuel economy, improving fuel combustion, reducing oil consumption, and increasing the exhaust temperature for subsequent use of the heat within the vehicle. In order to achieve these goals, the engine running temperature in the combustion chamber needs to be increased. However, while desirable to increase the temperature within the combustion chamber, it remains necessary to maintain the piston at a workable temperature. By keeping the piston at a workable temperature in the combustion chamber, the onset of carbon build-up on the upper land of the piston is controlled, which in turn improves the running efficiency of the engine. As such, although believed desirable to increase the temperature in the combustion chamber, there is a tradeoff in that increasing the combustion chamber temperature can result in increase of overall temperature of the piston, particularly in the upper land region.

Some attempts have been made to construct pistons having an ability to increase the combustion chamber running temperature. One known attempt uses a ceramic coating on an underlying metal piston. However, these pistons typically experience strength, durability and processing issues making them unsuitable for use. Other attempts include using moderate stainless steel having a chromium content between 4-6% and a thermal conductivity of about 33 W/m-K, and although useful to an extent, these efforts have not provided the necessary reduction in thermal conductivity to achieve and sustain the increased running temperatures desired.

Furthermore, US 2002/0046593 A1 discloses a piston including a lower crown part forged of steel and including a pair of pin bosses and an integral skirt formed as one piece with the pin bosses. The lower crown part is friction welded to an upper crown part to form at least one closed oil gallery within the piston head.

Moreover, US 4,831,917 B teaches a multiple piece piston provided for a diesel internal combustion engine having a combustion chamber depression in the crown of the piston. To achieve a low rate of heat flow into the piston ring area and thus into the cylinder liner which surrounds the piston, a separate piston base or crown surrounding the combustion chamber depression is formed by a ring element made of a material having poor thermal conductivity and the main body of the piston is made of a material with high thermal conductivity. The heat of combustion is thus conducted mainly axially through the piston main body and absorbed by sprayed cooling oil. The cooling oil, thus heated, can be utilized for heating purposes.

US 6,729,291 B1 discloses a multi-part cooled piston for an internal combustion engine, comprising an upper part and a lower part of the piston. The two parts are screwed together via a threaded bolt that is arranged on the upper part of the piston, and a threaded bore that is drilled into the lower part of the piston.

A piston constructed in accordance with this invention overcomes the disadvantages of known piston constructions, including those associated with ceramic coated pistons. As such, a piston constructed in accordance with this invention facilitates increasing the combustion chamber temperature, thereby providing enhanced running efficiencies, while having high strength and durability and also inhibiting the potential for carbon build-up.

### SUMMARY OF THE INVENTION

In accordance with one aspect of the invention, a piston includes an upper crown having a combustion surface with an upper land depending therefrom and a lower crown welded directly to the upper crown. The lower crown has a pair of pin bosses that depend from the upper crown to a pair of laterally spaced, axially aligned pin bores. The upper crown is constructed as a monolithic piece of a first material having a thermal conductivity within a range of about 7 to 25 W/m-K. The lower crown is constructed from a low grade steel material having a thermal conductivity higher than the upper crown. As such, the upper crown acts as a barrier to thermal conductivity and thus, the heat within a combustion chamber housing the piston for reciprocation therein is maintained and maximized. Accordingly, the running efficiencies and overall performance of the engine are enhanced by increasing the exhaust gas temperature for use in downstream engine applications, increasing fuel economy, facilitating complete fuel combustion, and inhibiting the formation of carbon build-up on the piston upper land.

In accordance with another aspect of the invention, the temperature within the combustion chamber is maintained above about 300 degrees Celsius in use, which has been determined to be an approximate upper temperature limit at which carbon build-up ceases.

In accordance with another aspect of the invention, the upper crown is constructed of 600 series stainless steel having between about 15 to 18 wt% chromium and a thermal conductivity of about 13 W/m-K.

In accordance with another aspect of the invention, the upper crown is constructed of Titanium having a thermal conductivity of approximately 7.8 W/m-K.

In accordance with yet another aspect of the invention, a method of constructing a piston for an internal combustion engine comprising the features of claim 3 is provided.

### BRIEF DESCRIPTION OF THE DRAWINGS

These and other aspects, features and advantages of the invention will become more readily appreciated when considered in connection with the following detailed description of presently preferred embodiments and best mode, appended claims and accompanying drawings, in which:
Figure 1 is a partially sectioned perspective view of a piston constructed in accordance with one aspect of the invention; and
Figure 2 is a cross-sectional view taken generally along a pin bore axis of the piston of Figure 1.

### DETAILED DESCRIPTION OF PRESENTLY PREFERRED EMBODIMENTS

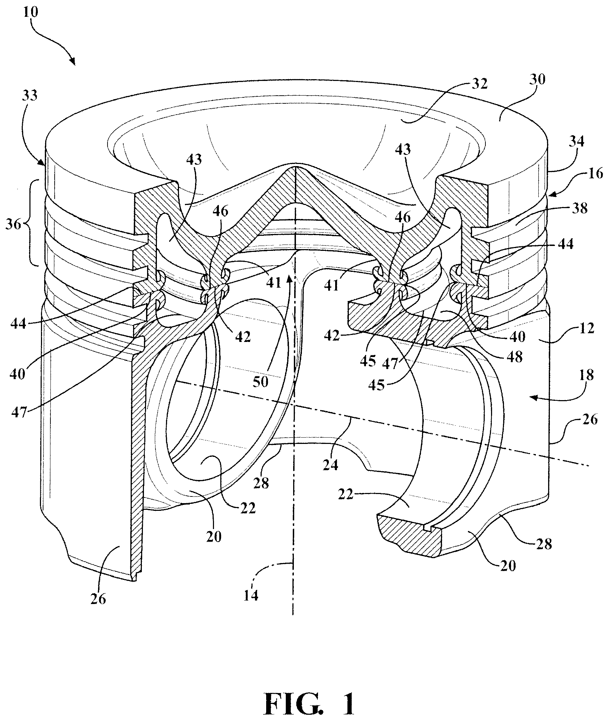

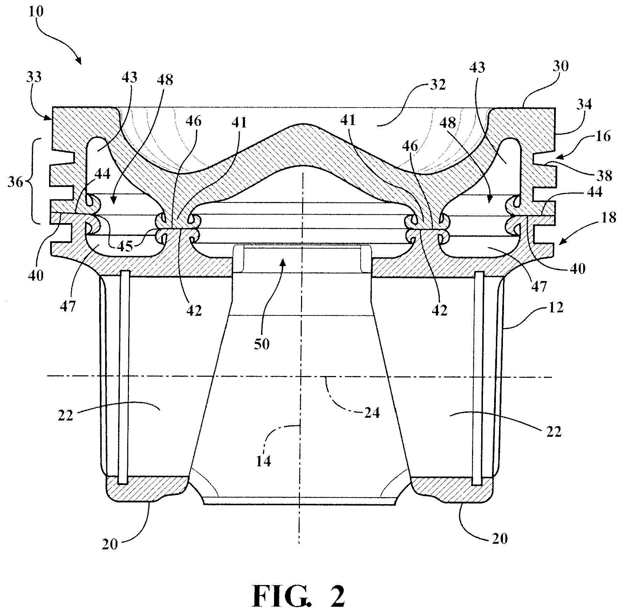

Referring in more detail to the drawings, Figures 1 and 2 illustrate a piston assembly, referred to hereafter simply as piston 10, constructed according to one presently preferred embodiment of the invention for reciprocating movement in a cylinder bore or chamber (not shown) of an internal combustion engine, such as a heavy duty diesel engine, for example. The piston 10 has a body 12, either cast or forged, or formed by any other process of manufacture, extending along a central longitudinal axis 14 along which the piston 10 reciprocates in the cylinder bore. The body 12 has an upper crown 16 joined to a lower crown 18. The lower crown 18 has a pair of pin bosses 20 depending from the upper crown 16 to provide laterally spaced pin bores 22 aligned along a pin bore axis 24 that extends generally transverse to the central longitudinal axis 14. The pin bosses 20 are joined to laterally spaced skirt portions 26 via strut portions 28. The skirt portions 26 are diametrically spaced from one another across opposite sides the pin bore axis 24 and have convex outer surfaces contoured for cooperation within the cylinder bore to maintain the piston 10 in a desired orientation as it reciprocates through the cylinder bore. The upper crown 16 is constructed as a monolithic piece from a first material, while the lower crown 18 is constructed from a separate piece from the upper crown 16 from a second material that is different from the first material. The first material has a lower thermal conductivity than the second material, wherein the first material is referred to hereafter as having a "low" thermal conductivity, with "low" being within a range of about 7 to 25 W/m-K. As such, the upper crown acts as a barrier to thermal conductivity to heat transfer from the upper crown 16 toward the lower crown 18, and thus, the heat generated within the cylinder bore above the upper crown 16 is substantially maintained in the cylinder bore, thereby improving fuel combustion, reducing formation of carbon build-up, increasing the exhaust gas temperature and otherwise enhancing the engine running performance.

The upper crown 16 of the piston 10 is represented here as having an upper combustion surface 30 with a combustion bowl 32 recessed therein to provide a desired gas flow with the cylinder bore. An outer wall 33, including an upper land 34 and a ring belt 36 extends downwardly from the upper surface 30 to an outer free end 40, with at least one annular ring groove 38 being formed in the ring belt 36 for floating receipt of a piston ring (not shown). An annular inner rib 41 depends from an under surface of the combustion bowl 32 to an inner free end 42, wherein the inner rib extends beneath the outer free end 40. Thus, the outer wall 33 and the inner rib 41 form an annular upper outer gallery portion 43. In accordance with one presently preferred embodiment, the upper crown 16 is constructed from a high grade stainless steel material, namely 600 series stainless steel having a chromium content of about 15-17.5 wt% and a thermal conductivity of about 13 W/m-K. In accordance with yet another embodiment, the upper crown 16 is constructed from titanium having a thermal conductivity of about 7.8 W/m-K.

The lower crown 18 is constructed separately from the upper crown 16, such as in a forging process, by way of example and without limitation, and then joined to the upper crown 16 via an upstanding annular outer rib free end 44 and an upstanding annular inner rib free end 46, which form an annular lower outer gallery portion 47. The upper and lower crowns 16, 18 are represented here as being joined together by a friction weld or any other suitable type of weld joint 45 formed across the respective outer free ends 40, 44 and inner free ends 42, 46, for example. As such, a substantially closed outer oil gallery 48 is formed between the upper and lower crowns 16, 18, by the oppositely facing gallery portions 43, 47 while an open inner gallery 50 is formed upwardly of the pin bores 22 beneath a central portion of the combustion bowl 32. It should be recognized that the piston 10, constructed in accordance with the invention, could have upper and lower crown portions formed otherwise, having different configurations of oil galleries, for example. The lower crown 18 is constructed from a low grade steel alloy, e.g. 4140H, or a micro-alloyed steel, for example.

In operation, the upper crown 16, being constructed from the "low" thermal conductivity steel, acts as a barrier to heat transfer to heat within the cylinder bore above the upper combustion surface 30. As such, the upper crown 16, and in particular, the region of the upper land 34 acts as an insulative heat sink, thereby elevating the upper land 34 in temperature during use above about 300 degrees Celsius. As such, carbon build-up is minimized on the upper land 34, and thus, the ring or rings (not shown) disposed in the ring groove 38 are not inhibited from sealing against the cylinder wall. It has been determined that carbon build-up tends to occur generally between about 200-300 degrees Celsius, and that above 300 degrees Celsius the carbon is burned off and thus, does not build up on the upper land 34. Accordingly, by ensuring the upper land remains at or above 300 degrees Celsius, the build-up of carbon is inhibited. In addition, by inhibiting the conductive transfer of heat downwardly through the upper crown 16, the exhaust gas is increased in temperature, thereby providing an added source of energy for use in other engine operations, such as a turbo compound, for example.

In accordance with another aspect of the invention, a method of constructing a piston 10 for an internal combustion engine is provided. The method includes forming an upper crown 16 as a monolithic piece of a first material having a thermal conductivity within a range of about 7 to 25 W/m-K with the upper crown 16 being formed having an upper combustion surface 30 with an upper land 34 depending therefrom, with the upper land 34 being formed having at least annular one ring groove 38 configured for receipt of a piston ring (not shown). The method further includes forming the upper crown 16 from one of a high grade stainless steel having between about 15 to 18 wt% chromium and a thermal conductivity of about 13 W/m-K, or Titanium having a thermal conductivity of approximately 7.8 W/m-K. The method further includes forming a lower crown 18 of a low grade steel alloy material, such as having about 1 wt% chromium and a thermal conductivity of about 43 W/m-K, such that the lower crown 18 is formed having a thermal conductivity higher than the upper crown 16. Further yet, the method includes forming the lower crown 18 having a pair of pin bosses 20 providing a pair of laterally spaced, axially aligned pin bores 22. Then, welding the lower crown 18 directly to the upper crown 16, such as in a friction weld process, for example, wherein a depending outer wall 33 and a depending inner rib 41 of the upper crown 16 are welded to an upstanding annular outer rib free end 44 and an upstanding annular inner rib free end 46 of the lower crown 18, respectively, to form a substantially closed outer gallery 48.

Obviously, many modifications and variations of the present invention are possible in light of the above teachings. It is, therefore, to be understood that within the scope of the appended claims, the invention may be practiced otherwise than as specifically described.

## Claims

1. A piston (10) for an internal combustion engine, comprising:
an upper crown constructed as a monolithic piece of a first material having a thermal conductivity within a range of about 7 to 25 W/m-K, said upper crown having an upper combustion surface with a combustion bowl (32) recessed therein and an upper land depending therefrom, said upper land having at least one annular ring groove configured for receipt of a piston ring; and
a lower crown (18) welded directly to said upper crown (16), said lower crown having a pair of pin bosses (20) providing a pair of laterally spaced, axially aligned pin bores (22), **characterized by**
said lower crown being constructed of a low grade steel alloy material having a thermal conductivity higher than said first material of said upper crown (16),
wherein the upper crown (16) is constructed of 600 series stainless steel having between about 15 to 18 wt% chromium and a thermal conductivity of about 13 W/m-K or Titanium having a thermal conductivity of approximately 7.8 W/m-K.

2. The piston of claim 1 wherein the lower crown (18) contains about 1 wt% chromium and a thermal conductivity of about 43 W/m-K.

3. A method of constructing a piston (10) for an internal combustion engine, comprising:
forming an upper crown (16) as a monolithic piece of a first material having a thermal conductivity within a range of about 7 to 25 W/m-K-with the upper crown being formed having an upper combustion surface (30) with a combustion bowl (32) recessed therein and an upper land (34) depending therefrom, with the upper land (34) having at least annular one ring groove (38) configured for receipt of a piston ring; and
forming a lower crown (18) of a low grade steel alloy material having a thermal conductivity higher than the material of the upper crown with the lower crown having a pair of pin bosses (20) providing a pair of laterally spaced, axially aligned pin bores (22); and
welding the lower crown (18) directly to the upper crown,
further including forming the upper crown (16) of 600 series stainless steel having between about 15 to 18 wt% chromium and a thermal conductivity of about 43 W/m-K or Titanium having a thermal conductivity of approximately 7.8 W/m-K.

4. The method of claim 3 further including forming the lower crown (18) having about 1 wt% chromium and a thermal conductivity of about 43 W/m-K.

## Patentansprüche

1. Kolben (10) für einen Innenverbrennungsmotor, umfassend:
eine obere Krone als monolithisches Stück aus einem ersten Material, das eine Wärmeleitfähigkeit in einem Bereich von etwa 7 bis 25 W/m-K aufweist, wobei die obere Krone eine obere Verbrennungsfläche mit einer darin eingelassenen Verbrennungsmulde (32) und einen davon abhängigen oberen Steg aufweist, wobei der obere Steg mindestens eine Ringnut aufweist, die für die Aufnahme eines Kolbenrings konfiguriert ist, und
eine untere Krone (18), die direkt mit der oberen Krone (16) verschweißt ist, wobei die untere Krone ein Paar von Bolzennaben (20) aufweist, die ein Paar von seitlich beabstandeten, axial ausgerichteten Stiftbohrungen (22) bereitstellen,
**dadurch gekennzeichnet, dass**
die untere Krone aus einem niedriglegierten Stahlmaterial aufgebaut ist, das eine höhere Wärmeleitfähigkeit als das erste Material der oberen Krone (16) aufweist,
wobei die obere Krone (16) aus Edelstahl der Serie 600 aufgebaut ist, der etwa 15 bis 18 Gew.-% Chrom und eine Wärmeleitfähigkeit von etwa 13 W/m-K aufweist, oder Titan und eine Wärmeleitfähigkeit von etwa 7,8 W/m-K aufweist.

2. Kolben nach Anspruch 1, wobei die untere Krone (18) etwa 1 Gew.-% Chrom enthält und eine Wärmeleitfähigkeit von etwa 43 W/m-K aufweist.

3. Konstruktionsverfahren für einen Kolben (10) für einen Innenverbrennungsmotor, umfassend:
das Bilden einer oberen Krone (16) als monolithisches Stück aus einem ersten Material, das eine Wärmeleitfähigkeit in einem Bereich von etwa 7 bis 25 W/m-K aufweist, wobei die obere Krone gebildet ist, indem sie eine obere Verbrennungsfläche (30) mit einer darin eingelassenen Verbrennungsmulde (32) und einen davon abhängigen oberen Steg (34) aufweist, wobei der obere Steg (34) mindestens eine Ringnut (38) aufweist, die für die Aufnahme eines Kolbenrings konfiguriert ist, und
das Bilden einer unteren Krone (18) aus einem niedriglegierten Stahlmaterial, das eine höhere Wärmeleitfähigkeit als das erste Material der oberen Krone aufweist, wobei die untere Krone ein Paar von Bolzennaben (20) aufweist, die ein Paar von seitlich beabstandeten, axial ausgerichteten Stiftbohrungen (22) bereitstellen, und
das Verschweißen der unteren Krone (18) direkt auf der oberen Krone,
weiter das Bilden der oberen Krone (16) aus Edelstahl der Serie 600 beinhaltend, der etwa 15 bis 18 Gew.-% Chrom aufweist und eine Wärmeleitfähigkeit von etwa 43 W/m-K oder Titan und eine Wärmeleitfähigkeit von etwa 7,8 W/m-K aufweist.

4. Verfahren nach Anspruch 3 weiter das Bilden der unteren Krone (18) beinhaltend, die einen Chromgehalt von etwa 1 Gew.-% und eine Wärmeleitfähigkeit von etwa 43 W/m-K aufweist.

## Revendications

1. Piston (10) pour un moteur à combustion interne, comprenant :
une couronne supérieure construite en tant que pièce monolithique en un premier matériau ayant une conductivité thermique dans une plage d'environ 7 à 25 W/m-K, ladite couronne supérieure ayant une surface de combustion supérieure avec une chambre de combustion (32) évidée à l'intérieur et un plateau supérieur en dépendant, ledit plateau supérieur ayant au moins une rainure de bague annulaire configurée pour la réception d'une bague de piston ; et
une couronne inférieure (18) soudée directement à ladite couronne supérieure (16), ladite couronne inférieure ayant une paire de bossages d'axe (20) fournissant une paire d'alésages d'axe (22) espacés latéralement, alignés axialement, **caractérisé par**
ladite couronne inférieure construite en un matériau d'alliage d'acier de qualité inférieure ayant une conductivité thermique supérieure à celle dudit premier matériau de ladite couronne supérieure (16),
dans lequel la couronne supérieure (16) est construite en acier inoxydable de la série 600 ayant entre environ 15 à 18 % en poids de chrome et une conductivité thermique d'environ 13 W/m-K ou de titane ayant une conductivité thermique d'environ 7,8 W/m-K.

2. Piston selon la revendication 1 dans lequel la couronne inférieure (18) contient environ 1 % en poids de chrome et une conductivité thermique d'environ 43 W/m-K.

3. Procédé de construction d'un piston (10) pour un moteur à combustion interne, comprenant :
la formation d'une couronne supérieure (16) en tant que pièce monolithique en un premier matériau ayant une conductivité thermique dans une plage d'environ 7 à 25 W/m-K avec la couronne supérieure formée ayant une surface de combustion supérieure (30) avec une chambre de combustion (32) évidée à l'intérieur et un plateau supérieur (34) en dépendant, avec le plateau supérieur (34) ayant au moins une rainure de bague annulaire (38) configurée pour la réception d'une bague de piston ; et
la formation d'une couronne inférieure (18) en un matériau d'alliage d'acier de qualité inférieure ayant une conductivité thermique supérieure à celle du matériau de la couronne supérieure avec la couronne inférieure ayant une paire de bossages d'axe (20) fournissant une paire d'alésages d'axe (22) espacés latéralement, alignés axialement ; et
le soudage de la couronne inférieure (18) directement à la couronne supérieure,
incluant en outre la formation de la couronne supérieure (16) en acier inoxydable de la série 600 ayant entre environ 15 à 18 % en poids de chrome et une conductivité thermique d'environ 43 W/m-K ou de titane ayant une conductivité thermique d'environ 7,8 W/m-K.

4. Procédé selon la revendication 3 incluant en outre la formation de la couronne inférieure (18) ayant environ 1 % en poids de chrome et une conductivité thermique d'environ 43 W/m-K.
